# EUROPEAN PATENT APPLICATION

(11) **EP 3 349 152 A1**
(43) Date of publication of application: **18.07.2018**
(21) Application number: 17151720.4
(22) Date of filing: 17.01.2017
(51) Int. Cl.: G06N 3/04

(54) **CLASSIFYING DATA**

(71) Applicant: Catchoom Technologies S.L., 08006 Barcelona (ES)
(72) Inventor: Cervantes Martín, Esteve, 08006 Barcelona (ES); Geronimo Gomez, David, 08006 Barcelona (ES); Husain, Syed Farzad, 08006 Barcelona (ES); Adamek, Tomasz, 08006 Barcelona (ES)
(74) Representative: ZBM Patents - Zea, Barlocci & Markvardsen

(57) **Abstract**

Artificial neural network architectures suitable for fine-grained classification of structured data are proposed. The proposed neural networks perform coarse-to-fine refinement of data representation in an end-to-end fashion. The proposed architectures are scalable in terms of performance, computational complexity and memory footprint. The proposed methods are applicable to the fashion image recognition problem.

## Description

The present disclosure relates to methods and devices for use in artificial neural networks and more specifically to architectures as well as testing and training methods for classifying data.

### BACKGROUND

Artificial neural networks (also referred to as connectionist systems) are a computational graph approach that is based on a large collection of simple computational units organized in several groups or layers loosely modeling the way neurons work in the brain to solve problems. Each neural network unit (neuron) is connected to many others by a link. The links are modeled by weights that can enforce or inhibit the activation between neurons. There are several categories of layers depending on the configuration of the links between their units. For image processing, convolutional layers are the most commonly used. Neural networks that use this kind of layers are called Convolutional Neural Networks (CNN). These systems are self-learning and trained using high volumes of annotated data through the back-propagation algorithm. This algorithm has two stages. First, the forward pass, which computes all the activations of the neurons until reaching the output given input data. Second, the backward pass, which takes the output activations and computes the error compared to the desired prediction (annotation). This comparison and computation of the error is defined by the objective function, which models the problem to solve by the network. The error is used to calculate the gradients of the objective function with respect to each weight in the network following the chain rule. According to these gradients and using an optimization method all the weights between neurons are adjusted in order to do better predictions in the next forward pass. The training phase consists in iterating over these two steps until convergence while the testing phase uses the trained and frozen weights to obtain predictions. The training can be done in two ways: in stages, which means that training different parts of the network separately and then combining the results to obtain the final result; or end-to-end, where the network is trained from the input to the final output at once. When having enough annotated data, the end-to-end training provides better results than the staged one. This is because the process has access to all the available parameters of the network, which allows the network to find its optimal configuration.

When trained, the layers of the neural network end up being more abstract in its representation as depth increases. A key factor of the convergence when training a neural network is to train using mini-batches. Mini-batch training consists in sending several annotated samples at once in the forward pass to be able to average the error measures in the backward, thus obtaining more stable steps towards the optimal configuration. However, training artificial neural networks is highly computational and memory expensive. The use of GPUs has enabled the use of these models. Nonetheless, training a state-of-the-art neural network on a challenging dataset can take days even using the most modern GPUs.

Fine-grained classification consists in discriminating between a set of very similar classes. Fashion image recognition belongs to the fine-grained classification problems as there is a large amount of very similar garments to discriminate (e.g. jeans, chinos, suit pants, etc.).

Artificial neural networks have recently demonstrated superior performance in many tasks such as image recognition or natural language processing when compared to other machine learning algorithms. The typical approach to construct a classifier using neural networks is to concatenate a set of layers that process the input signal (e.g., convolutional, fully connected, etc.) and attach a single layer at the end containing all the classes to distinguish, which is usually referred to as flat classifier. In a flat CNN the architecture is composed of several convolutional layers followed by some fully connected layers and ending in a single, flat output predicting among all the available classes. While this approach can successfully manage up to a certain number of distinguishable classes, its performance decreases when the number of similar classes increases. Note that in fine-grained classification similarity between classes is not homogeneously distributed, which also harms flat classifiers performance. Furthermore, in fine-grained classification, the access to large volumes of annotated data is limited given that annotating requires high-level human expertise in the specific field. This can lead to unbalanced and unrepresented classes, which are not handled properly by flat classifiers.

Also, neural networks excel in the task of retrieving similar items by exploiting their internal representations of the data. Given that similar concepts are internally represented by similar descriptions, the distance between the more abstract descriptors is widely used as a measure of similarity. In image retrieval, and more specifically in fashion image recognition, having unique and rich descriptors allows building recommendation systems exploiting garments similarity.

The fact that a big amount of the existing data (e.g., images or text) can be organized in a hierarchy of concepts represents an invaluable property to exploit. Specifically, it allows reducing an intractable problem by traditional approaches into a tree-based sequence of easier decisions taken by more refined classifiers at each level of depth. For instance, fashion items are organized in a very deep taxonomy with several levels of specificity. There exist several approaches that exploit this hierarchical property of data.

Wang et al. ("Learning fine-grained descriptions via a CNN tree for large-scale classification" by Zhenhua Wang, Xingxing Wang and Gang Wang, arXiv preprint arXiv:1511.04534, 2015) describe a hierarchical architecture of networks in a multi-stage training approach. The system uses coarse classifiers to identify a fixed number of clusters of difficult samples via confusion matrices and creates a tree-structured set of sub-networks based on them to carry out the fine-grained classification. While this representation manages to create fine-grained descriptions and improve classification accuracy, it has three main disadvantages that limit its performance and affect its computational complexity.

First, the system proposed by Wang et al. is limited to perfect trees, which is not generic for most taxonomies. This implies that the system devotes the same effort in distinguishing among extremely fine-grained classes as for coarser classes. Second, an entire convolution neural network (CNN) is trained for each tree node using one of the subsets extracted from the previous node. This results in a huge number of total parameters, which not only is expensive in computational time but also has a big impact in the memory footprint. Third, a staged training approach is employed by performing an independent training process for each one of the nodes. This implies that the training not only takes much longer than an end-to-end procedure, i.e., the parameters optimization is performed globally, but also that the different levels of the hierarchy do not explicitly share information from each other, which leads to suboptimal performance. Finally, the system is unable to provide a rich and unique description from the architecture. This removes the possibility of using the same architecture for a recommendation system.

Another system taking advantage of a hierarchical representation is proposed by Zhicheng Yan et al. in "HD-CNN: hierarchical deep convolutional neural networks for large scale visual recognition", (Proc. of the IEEE International Conference on Computer Vision. 2015). In this paper, the first layers are generic for all the classification tasks, and are used to extract low level descriptions. Then, these descriptions are sent to several, as the authors refer to them, building blocks (remaining layers of the general CNN). One of these building blocks is in charge of classifying a coarse (level 1) description while the rest (level 2) are in charge of classifying finer predictions of the previous one. The architecture is trained in several stages. In the first stage, only the coarse classifier is trained. From that training, the system selects groups of classes that are usually confused or wrongly classified. Then a building block is trained for each group, which feeds from the aforementioned low level description. Finally, the whole network is fine-tuned. This approach has several drawbacks. First, it is not scalable as the architecture only shares the first generic convolutional layers in charge of extracting basic low level description. This means that each time a new sub-classification task is added, all the remaining layers needed to perform high level descriptions must be appended. This means that, when either the number of sub-tasks or the depth of the tree is increased, the number of parameters grows exponentially, thus its computational complexity and memory footprint. This constrain forces the authors to explore only 2 level hierarchies and leave as future work the exploration of new architectures to handle any depth. Second, this architecture does not exploit the interrelated information between classification tasks. Each classification task is learned from the same low level descriptions separately. This forces the need to impose consistency constrains between the coarse classifier and the fine-grained classifiers in the objective function as they are not related to each other. Third, the system does not have a unique description containing all the information describing the input data, hence making it difficult to build a recommendation system around it. Finally, the system is trained in several stages, which can lead to suboptimal performance.

To sum up, all the solutions proposed fail at being scalable (computational complexity and memory footprint) and generic in its application (due to their architectural decisions). Furthermore, interrelated classification tasks are trained separately and thus higher order information is not exploited. Finally, staged training algorithms are used which, when having enough data, have shown to provide suboptimal performance compared to end-to-end solutions.

### SUMMARY

A method for classifying data using a tree architecture neural network is proposed. It is formed by a generic shared architecture, which has the role of extracting a generic description, followed by a tree of processing units that recursively map the descriptions to more abstract concepts.

In a first aspect a method of classifying data in a tree-based architecture neural network is proposed. The proposed method comprises receiving a description of a sample piece of data, generating a refined description, sending the refined description to a classifier module, generating classification predictions, providing labels to a selector module and sending the refined description to the selector module to distribute to child nodes. For example, in the case of image recognition, an intermediate node "refined category" may receive a description coming from its parent node, the "Category" node, and refine it for the current classification task, which distinguishes different types of the image category. Then, the node may map the description to classification probabilities and thus generate classification predictions.

When the node is not a leaf node the method may further comprise distributing the refined description to children nodes. Distributing the refined description to children nodes may comprise activating one or more children nodes based on the received labels. During a training mode of operation the description of the sample piece of data may be accompanied by annotations defining its content and the labels provided to the selector module may comprise one or more of the sample data annotations. During a testing mode of operation the labels provided to the selector module may comprise one or more of the classification predictions generated by the classifier module. The active children nodes may be defined by the annotations during the training mode of operation and by the predictions during the testing mode of operation. In testing mode, an activation criterion may be defined to determine the active children nodes (e.g., it may be the prediction with maximum probability, the predictions with probability above a threshold, etc.).

In some examples, the sample piece of data comprises a sample image and the tree-based classifier may be a tree-based image classifier. In some examples, the sample images may comprise garment images and the tree-based classifier may be a garment image classifier. The description of the images may be generated by a convolutional neural network. Thus the root of the tree may be a CNN node. The proposed method may be applied to the problem of classifying fashion images. In this area, the garments are categorized by the industry in a complex and deep taxonomy that leads to an overwhelming number of different classes to distinguish.

The proposed architecture behaves differently when training and when testing. During training, the information flows through the tree according to the provided annotations while during testing the information is sent according to the probabilities predicted by the activation function. This is different from other related approaches to the problem, where the entire tree network is activated for each sample. The proposed architecture allows activating only the branch/es of the tree to whom the input sample is related to. This dynamic activation makes the network highly scalable as it avoids spending time and resources by processing the information in all the unrelated nodes, which will not be updated or predicted.

In another aspect, a tree-based architecture data classifier is disclosed. The proposed classifier may comprise two or more classifying nodes. Each node may comprise a descriptor module, to receive a description of a sample piece of data, and generate a refined description. In some cases, the refined description may be identical to the received description. Each node may further comprise a classifier module to receive the refined description and generate classification predictions. Each node may further comprise a selector module to receive the refined description and labels associated to the sample piece of data. The selector module may be configured to distribute the refined description to child nodes.

In some examples, the selector module may comprise a first input to receive the refined description, a second input to receive the labels and an activation output, in communication with one or more child nodes. The selector module may be configured to process the labels and transmit the refined description through the activation output to selected one or more child nodes based on the received labels.

In some examples, the classifier module, during a training mode of operation may be configured to identify annotations relevant to the node and update probabilities of classification predictions based on the identified relevant annotations. It may then provide the identified annotations as labels to the selector module. During a testing mode of operation the classifier module may be configured to generate classification predictions for the refined description and send the generated classification predictions as labels to the selector module .Thus the behavior of the nodes is different during testing and during training.

In some examples, the data classifier may further comprise a mini-batch mode of operation. During the mini-batch mode of operation, the descriptor module may receive a mini-batch of descriptions and generates a mini-batch of refined descriptions. The selector module may then be configured to split and regroup the mini-batch in forward and backward passes, respectively, according to the corresponding labels.

Contrary to previous solutions, the proposed architecture is scalable in terms of computational complexity and memory footprint for any given depth. This is thanks to the following:
(i) Refined representations. Each node in the tree architecture progressively refines the previous coarser description for its specific more abstract classification task. This approach provides three advantages:
   - Small increase (within the same order) in computational and memory resources for each classification task added, i.e., highly scalable.
   - The processing nodes are interconnected and trained end-to-end. This leads to a globally refined architecture with interrelated descriptions that enrich each individual node representation.
   - Single fine-grained and compact description.
(ii) Selective activations. A Selector module is in charge of activating only the tree branches that are relevant to the input data. Also, it splits/regroup mini-batches in forward/backward passes according to the annotations. This resolves into a system:
   - With reduced computational complexity. Only few nodes are activated for each forward pass.
   - With ability to train/test in mini-batches with minimal computational resources.
   - Able to exploit partially labelled data.

In another aspect, a computer program product is disclosed. The computer program product may comprise program instructions for causing a computing system to perform a method of classifying data using a tree-based architecture neural network according to some examples disclosed herein.

The computer program product may be embodied on a storage medium (for example, a CD-ROM, a DVD, a USB drive, on a computer memory or on a read-only memory) or carried on a carrier signal (for example, on an electrical or optical carrier signal).

The computer program may be in the form of source code, object code, a code intermediate source and object code such as in partially compiled form, or in any other form suitable for use in the implementation of the processes. The carrier may be any entity or device capable of carrying the computer program.

For example, the carrier may comprise a storage medium, such as a ROM, for example a CD ROM or a semiconductor ROM, or a magnetic recording medium, for example a hard disk. Further, the carrier may be a transmissible carrier such as an electrical or optical signal, which may be conveyed via electrical or optical cable or by radio or other means.

When the computer program is embodied in a signal that may be conveyed directly by a cable or other device or means, the carrier may be constituted by such cable or other device or means.

Alternatively, the carrier may be an integrated circuit in which the computer program is embedded, the integrated circuit being adapted for performing, or for use in the performance of, the relevant methods.

### BRIEF DESCRIPTION OF THE DRAWINGS

Non-limiting examples of the present disclosure will be described in the following, with reference to the appended drawings, in which:
Figure 1 schematically illustrates a tree-based architecture for classifying data according to an example;
Figure 2 schematically illustrates a tree-based architecture for classifying fashion images according to an example;
Figure 3 is a flow chart of a testing method according to an example;
Figure 4 is a flow chart of a training method according to an example.

### DETAILED DESCRIPTION OF EXAMPLES

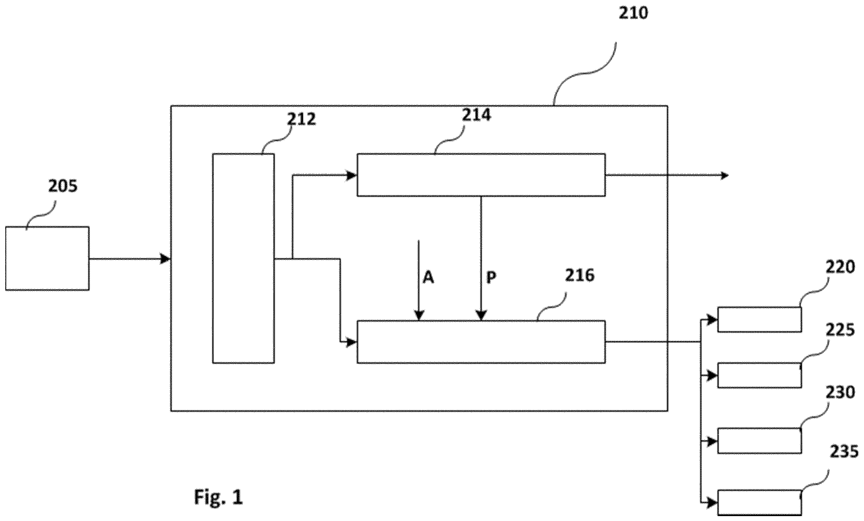

The tree architecture neural network is composed by two parts, as illustrated in FIG. 1. As we apply this architecture to image processing, the first part 205 may be a generic CNN used as a description extractor. This generic CNN may be switched by any desired architecture in the literature. Then, the proposed tree neural network may be attached to the end of the CNN.

The tree network may be constructed by aggregating finer classifiers in a recursive structure. This structure implies that the incoming description from a parent node is refined for the current classification task. This refinement process maps a sub-space of the parent description into a new and more specific one. In this new sub-space, the boundaries that were difficult to define in the parent sub-space are now easier to build, hence providing better classification performance. The refinement policy allows the network to be highly scalable as an addition of a task or a new level only involves a small refinement step. Also, it allows to construct non-perfect trees that can adapt to any structure of the input data.

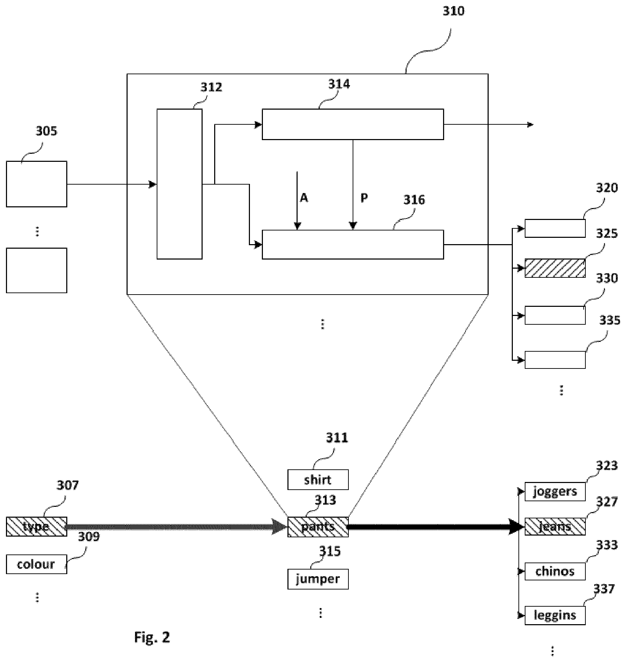

Each node 210 of the tree architecture may be formed by a hierarchical unit that takes as input the previous coarser description and outputs predictions for its classification task and a refined description. The unit contains several modules illustrated in FIG. 2:
(i) The description module 212: it may take the previous coarser description (coming from the parent node 205 or from CNN 205) and build a new more refined description for the current more specific classification task. This specific implementation may use a fully connected layer for this purpose but other processing layers could be used.
(ii) The classifier module 214: it may be composed by one processing element that may map the refined description to the number of classes in the current classification task, followed by a function (e.g., SoftMax, Sigmoid...) that may map the unbounded output to a number of probabilities. This specific implementation may use a fully connected layer to do the mapping to a number of classes but any other layer to this purpose could be used.
(iii) The selector module 216: this module may distribute the data through the tree by taking the refined description and sending it to the relevant child nodes. This routing may be carried out by taking into account the available annotations (A) during training time and using the already trained predictions (P) during testing time. Note that the leaf nodes of the tree do not need the Selector module since they do not perform any further description routing; hence they are composed only by the Description and Classifier modules.

The classifying node 210 may have only one parent node 205 but as many as required child nodes. In the example of Fig. 2 the node 210 is depicted with four child nodes 220, 225, 230 and 235. However, any node of the tree, according to the proposed architecture may have any number of child nodes or no child nodes. Thus, the tree does not need to be a perfect tree.

The designed architecture behaves differently when training and when testing. During training, the information flows through the tree according to the provided annotations while during testing the information is sent according to the probabilities predicted by the activation function. This is different from the other related approaches which activate the entire tree network for each sample. This allows activating only the branch/-es of the tree to whom the input sample is related to. This dynamic activation makes the network highly scalable as it avoids spending time processing the information in all the unrelated nodes, which will not be updated or predicted.

Also during training, the proposed architecture uses a specific way to manage mini-batches that is advantageous compared to previous approaches. Each sample from a mini-batch is annotated with a different set of classes and subclasses. When using mini-batch training, the selector module splits the mini-batch into smaller batches of samples and sends them to the corresponding child nodes. The selector module also regroups the incoming gradients from the back-propagation into the original structure. This capability allows training the network using the dynamic activation of the branches in the tree, hence speeding up the training.

A side but important advantage of the selector module is that the training can handle depth-partially annotated data (samples only containing annotations that do not reach the leaves of the taxonomy). A partially annotated sample is forwarded only as far as the depth of its annotation. This allows using all the available data and building more robust representations of earlier concepts. This represents an advantage over previous approaches, which require annotations for the full hierarchy to carry out the training.

With all the specified architectural decisions, the entire network can be trained end-to-end. As stated above, this allows finding the optimal configuration of weights for solving the desired problem.

Finally, another consequence of this architecture is that it forces the last description of the shared CNN to contain all the information needed for the upcoming classification tasks in a highly non-linear way. This results in a compact and very fine-grained descriptor that can also be exploited for e.g., fine-grained similarity retrieval.

Figure 2 schematically illustrates a tree-based architecture for classifying fashion images according to an example. In the example of Fig. 2 a parent node 305 may send a description to processing node 310. The higher level parent nodes may process fashion item attributes (e.g. type, 307, colour 309, etc.). The parent node 305 may process fashion item types and identify "pants" in an image. It may thus activate the processing node "pants" out of a number of processing nodes containing fashion item types (e.g. "shirts" 311, "pants" 313, "jumpers" 315, etc.). The processing node may receive the description of "pants" and process fashion item "pants" to identify which class of "pants" it may belong to. When an image description of a fashion item arrives at node 310, the descriptor module 312 may refine the description and send the refined description to classifying module 314. The classifying module 314 may have a number of classes related to "pants" (e.g. "joggers" 323, "jeans" 327, "chinos" 333, "leggings" 337 etc.). It may then assign probabilities and identify the class with the highest probability as the "jeans" class. It may then forward the result to selector module 316. The selector module 316 may receive the refined description from descriptor module 313 and the identified class from classifying module 314 and activate the relevant child node. In the example of Fig. 2 the child node to be activated is node 325 that may be responsible for "jeans". The other modules 320, 330 and 335 may or may not be activated depending on the probabilities assigned to classes by the classifying node and the probability thresholds for activating a child node.

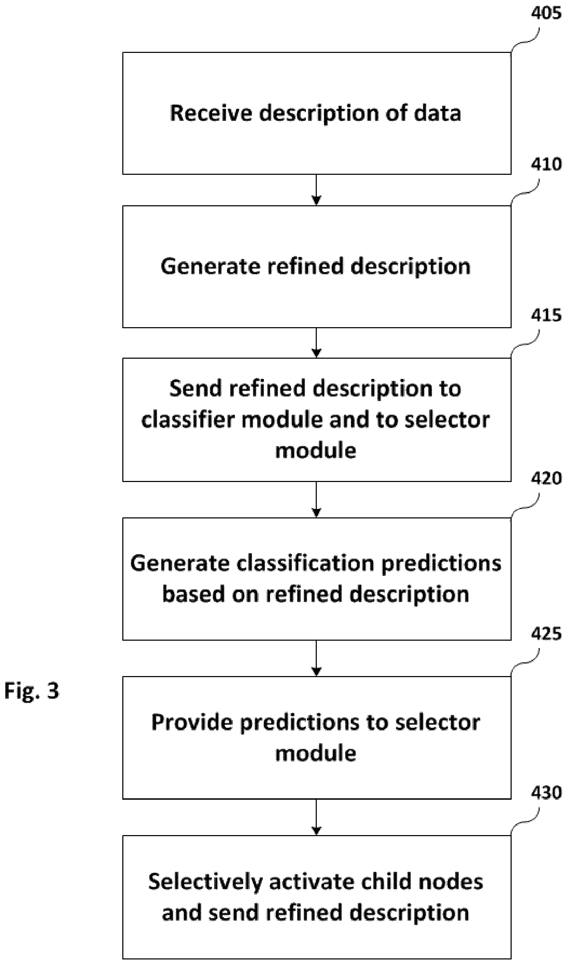

Figure 3 is a flow chart of a testing method according to an example. In block 405, a description of a sample piece of data may be received from a parent node. In block 410, a refined description may be generated. In block 415, the refined description may be sent to a classifier module and to a selector module. In block 420, the classifier module may generate classification predictions. In block 425, the classification predictions may be provided to the selector module. In block 430, the selector module may selectively activate the child nodes and provide the refined description to the activated child nodes.

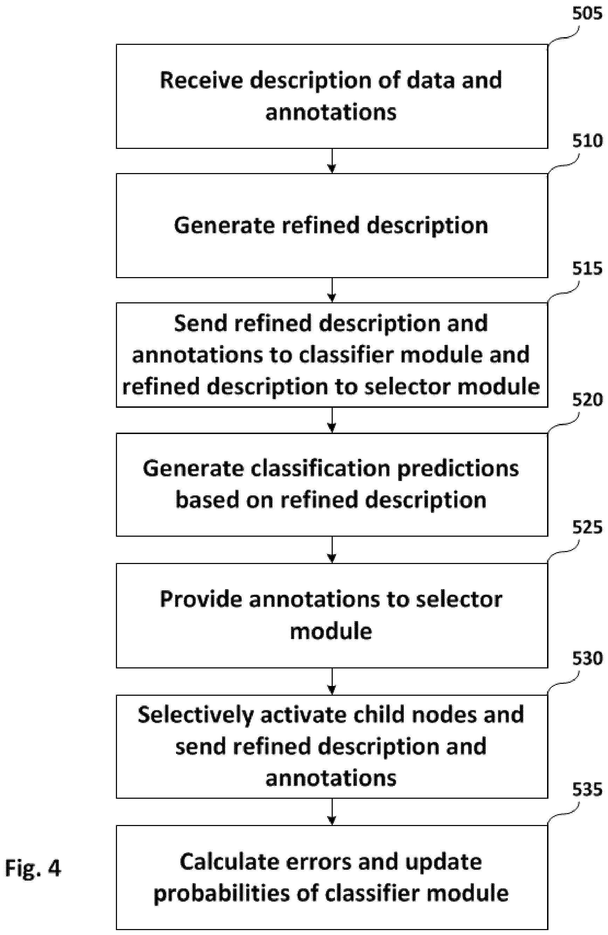

Figure 4 is a flow chart of a training method according to an example. In block 505, a description of a sample piece of data with annotations may be received. In block 510, a refined description may be generated. In block 515, the refined description may be sent to a classifier module and the refined description and annotations to a selector module. In block 520, the classifier module may generate predictions based on the refined description. In block 525, the selector module may selectively activate child nodes based on the annotations and provide the refined description and annotations to the activated child nodes. In block 530, the errors may be calculated and parameters of the classifier and descriptor modules may be updated.

Those of skill would further appreciate that the various illustrative logical blocks, modules, circuits, and algorithm steps described in connection with the embodiments disclosed herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the exemplary embodiments of the invention.

The various illustrative logical blocks, modules, and circuits described in connection with the embodiments disclosed herein may be implemented or performed with a general purpose processor, a Graphics Processing Unit (GPU), a Digital Signal Processor (DSP), an Application Specific Integrated Circuit (ASIC), a Field Programmable Gate Array (FPGA) or other programmable logic device, discrete gate or transistor logic, discrete hardware components, or any combination thereof designed to perform the functions described herein. A general purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The steps of a method or algorithm described in connection with the embodiments disclosed herein may be embodied directly in hardware, in a software module executed by a processor, or in a combination of the two. A software module may reside in Random Access Memory (RAM), flash memory, Read Only Memory (ROM), Electrically Programmable ROM (EPROM), Electrically Erasable Programmable ROM (EEPROM), registers, hard disk, a removable disk, a CD-ROM, or any other form of storage medium known in the art. An exemplary storage medium is coupled to the processor such that the processor can read information from, and write information to, the storage medium. In the alternative, the storage medium may be integral to the processor. The processor and the storage medium may reside in an ASIC. The ASIC may reside in a user terminal. In the alternative, the processor and the storage medium may reside as discrete components in a user terminal.

In one or more exemplary embodiments, the functions described may be implemented in hardware, software, firmware, or any combination thereof. If implemented in software, the functions may be stored on or transmitted over as one or more instructions or code on a computer-readable medium. Computer-readable media includes both computer storage media and communication media including any medium that facilitates transfer of a computer program from one place to another. A storage media may be any available media that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Also, any connection is properly termed a computer-readable medium.

Although only a number of examples have been disclosed herein, other alternatives, modifications, uses and/or equivalents thereof are possible. Furthermore, all possible combinations of the described examples are also covered. Thus, the scope of the present disclosure should not be limited by particular examples, but should be determined only by a fair reading of the claims that follow. If reference signs related to drawings are placed in parentheses in a claim, they are solely for attempting to increase the intelligibility of the claim, and shall not be construed as limiting the scope of the claim.

Further, although the examples described with reference to the drawings comprise computing apparatus/systems and processes performed in computing apparatus/systems, the invention also extends to computer programs, particularly computer programs on or in a carrier, adapted for putting the system into practice.

## Claims

1. A method of classifying data in a tree-based architecture neural network, the method comprising:
receiving a description of a sample piece of data;
generating a refined description;
sending the refined description to a classifier module;
generating classification predictions;
providing labels to a selector module;
sending the refined description to the selector module to distribute to child nodes.

2. The method according to claim 1, further comprising:
distributing the refined description to children nodes.

3. The method according to claim 2, wherein distributing comprises activating one or more children nodes based on the labels provided.

4. The method according to any of previous claims, wherein during a training mode of operation the sample piece of data comprises annotations and the labels provided to the selector module comprise one or more of the sample piece of data annotations.

5. The method according to any of claims 1 to 3, wherein during a testing mode of operation the labels provided to the selector module comprise one or more of the classification predictions generated by the classifier module.

6. The method according to any of previous claims, wherein the sample piece of data comprises a sample image and the tree-based classifier is a tree-based image classifier.

7. The method according to claim 5, wherein the sample images comprise garment images and the tree-based classifier is a garment image classifier.

8. The method according to any of claims 6 or 7, wherein the description of the images is generated by a convolutional neural network.

9. A tree-based architecture data classifier, comprising:
two or more classifying nodes, each node comprising:
a descriptor module, to receive a description of a sample piece of data and generate a refined description;
a classifier module to receive the refined description and generate classification predictions;
a selector module to receive the refined description and labels associated to the sample piece of data, the selector module configured to distribute the refined description to child nodes.

10. The tree-based architecture data classifier according to claim 9, wherein the selector module comprises:
a first input to receive the refined description;
a second input to receive the labels;
an activation output, coupled to one or more child nodes,
wherein the selector module is configured to process the labels and send the refined description through the activation output to select one or more child nodes based on the received labels.

11. The tree-based architecture data classifier according to any of claims 9 to 10, wherein the classifier module, during a training mode of operation is configured to:
identify annotations relevant to the node,
update probabilities of classification predictions based on the identified relevant annotations; and
provide the identified annotations as labels to the selector module.

12. The tree-based architecture data classifier according to any of claims 9 to 10, wherein the classifier module, during a testing mode of operation is configured to generate classification predictions for the refined description and send the generated classification predictions as labels to the selector module.

13. The tree-based data classifier according to any of claims 9 to 12, further comprising a mini-batch mode of operation, wherein the descriptor module receives a mini-batch of descriptions and generates a mini-batch of refined descriptions and the selector module is configured to split and regroup the mini-batch in forward and backward passes, respectively, according to the corresponding labels.

14. A computer program product comprising program instructions for causing a computing system to perform a method of classifying data using a tree-based architecture according to any of claims 1 to 8.

15. A computer program product according to claim 14, embodied on a storage medium or carried on a carrier signal.
